# EUROPÄISCHE PATENTANMELDUNG

(11) **EP 0 846 910 A1**
(43) Veröffentlichungstag der Anmeldung: **10.06.1998**
(21) Anmeldenummer: 97120720.4
(22) Anmeldetag: 26.11.1997
(51) Int. Cl.: F16L 55/162, C04B 28/26

(54) **Verfahren zur Sanierung von flüssigkeitsführenden erdverlegten Rohrleitungen durch Injektion von gelbildenden Wasserglaslösungen**

(30) Priorität: 04.12.1996 DE 19650206
(71) Anmelder: Henkel Kommanditgesellschaft auf Aktien, 40589 Düsseldorf-Holthausen (DE)
(72) Erfinder: Sass, Joachim, 51143 Köln (DE); Friedemann, Wolfgang, Dr. Dipl.-Chem., 53225 Bonn (DE); Schürtz, Jost, Dr. Dipl.-Chem., 42657 Solingen (DE); Kuhr, Wilhelm, Dr. Dipl.-Chem., 41468 Neuss (DE); Schilling, Gaby, Dr. Dipl.-Chem., 40219 Düsseldorf (DE); Pesch, Wolfgang, Dipl.-Ing., 41515 Grevenbroich (DE)

(57) **Zusammenfassung**

Verfahren zur Abdichtung schadhafter Stellen in nicht begehbaren erdverlegten Rohrleitungen durch Injektion einer gelbildenden Flüssigkeit aus dem Rohrleitungsinnenraum in den schadhaften Bereich, bei dem der schadhafte Rohrleitungsabschnitt in beiden Richtungen über einen oder zwei gegen die Kanalwandung verspannbare(n) Packer begrenzt und die gelierende Flüssigkeit in den durch den oder die Packer abgeschlossenen Rohrleitungsabschnitt eingepreßt wird, **dadurch gekennzeichnet,** daß als gelbildende Flüssigkeit eine Wasserglaslösung eingesetzt wird, die im Packer selbst, vor dem Einspeisen in den Packer oder beim Austreten aus dem Packer mit Estern oder mit einer wäßrigen Härterlösung vermischt wird, die eine oder mehrere der folgenden Komponenten enthält: Alkalimetall-Aluminat, Salze von Erdalkalimetall-Kationen, saure wasserlösliche Salze, Glyoxal, organische Säuren oder deren Verbindungen, die Hydroxidionen zu binden vermögen.

## Beschreibung

Die Erfindung betrifft ein Verfahren zur partiellen Instandsetzung defekter erdverlegter Rohrleitungen, die einen nicht begehbaren Leitungsquerschnitt aufweisen. Es betrifft Rohrleitungen, die die Aufgabe haben, Flüssigkeiten zu transportieren. Beispiele hierfür sind Pipelines. Trinkwasserleitungen und insbesondere Abwasserkanäle. Auch weg die Aufgabe der Rohrleitungen darin besteht, Flüssigkeiten zu transportieren, wird aus der nachstehenden Offenbarung des erfindungsgemäßen Verfahrens jedoch offensichtlich, daß der Flüssigkeitstransport während der Instandsetzung der Rohrleitungen gegebenenfalls unterbunden werden muß. Vorzugsweise wird der instandzusetzende Leitungsabschnitt so weitgehend wie möglich von der Flüssigkeit entleert. Verwendet man für das nachstehend beschriebene Verfahren jedoch einen sogenannten Durchfluß-Packer, kann während der Sanierung der Flüssigkeitsstrom durch den Packer hindurch aufrecht erhalten werden.

In Kanälen und Versorgungsleitungen wie beispielsweise Frisch- oder Abwassersystemen kommt es durch Schäden am Rohrmaterial und insbesondere an Rohrstößen zu Undichtigkeiten und gegebenenfalls zu Hohlräumen, so daß nicht nur eine Gefährdung des Kanals, sondern auch der Umgebung eintreten kann. Ferner führen diese Undichtigkeiten zu Ex- oder Infiltrationen von Wasser, so daß einerseits das die Leitung umgebende Grundwasser durch Abwasser kontaminiert werden kann und andererseits die zu entsorgenden Wässer durch Zuflüsse von außen in ihrem Volumen erheblich vermehrt werden. Um diese Schadstellen zu beheben, ist es bekannt, Packer so zu positionieren, daß sie die Schadstelle jeweils einschließen, um dann über das Mittelteil des Packers Injektionsmittel einzupressen, mit dem die Schadstelle des Rohrmaterials und der Bereich des Bettungsmaterials, der die Rohrleitung unmittelbar umgibt, ausgefüllt wird. Als Injektionsmittel werden Gele und ähnliche Materialien eingepreßt, die insbesondere bei größeren Schadstellen dazu neigen, anschließend durch das Wasser wieder ausgewaschen zu werden. Gelartige Injektionsmittel werden verwendet, weil nur über diese Materialien eine ausreichend dichte Ausfüllung des schadhaften Rohrmaterials und bereichsweise des Porenvolumens im umgebenden Bettungsmaterial möglich ist. Der Packer wird nach Druckentlastung der Verspannmanschetten aus dem Bereich der Schadstelle wieder herausgezogen und dann erneut an einer weiteren Schadstelle positioniert.

Die US-A-4 691 728 beschreibt Bau und Funtionsweise eines derartigen Packers näher. Eine weitere Ausführungsform eines Packers, die auch im Rahmen der vorliegenden Erfindung verwendet werden kann, ist in der DE-C-39 13 317 näher beschrieben. Bei einem Packer handelt es sich um ein Gerät, dessen Querschnitt an den Querschnitt der Rohrleitung angepaßt ist. Über in der Regel zwei aufblasbare Verspannmanschetten kann der Packer an einer bestimmten Position in der Rohrleitung fixiert werden. Die genaue Positionierung des Packers, die über ein Seilzug und ein Steuergerät außerhalb der Rohrleitung erfolgt, läßt sich durch eine Videokamera kontrollieren. Nach Fixieren des Packers durch Aufblasen der Verspannmanschetten können aus dem Zwischenraum zwischen den Manschetten Substanzen in defekte Stellen in der Rohrleitung und gegebenenfalls im dahinterliegenden Erdreich eingepreßt werden. Beispielsweise wird in der DE 39 13 317 ein Verfahren und eine Vorrichtung zur partiellen Instandsetzung defekter Kanäle beschrieben, bei dem die Sanierung durch Injektion eines aus zwei Komponenten bestehenden Silicatharzes erfolgt. Dabei wird im Packer eine Hochdruckgegenstromvermischung beider Komponenten vorgenommen, wobei die beiden Komponenten getrennt im Kreis gepumpt und dabei abgestimmt auf die Reaktionszeit des Harzes erwärmt und erst im Packer taktweise zusammen geführt werden. Dabei wird nicht näher angegeben, woraus das 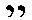 Silicatharz" besteht. Der Begriff 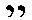 Harz" legt es jedoch nahe, daß ein organisches Polymer mitverwendet wird. Das zum Abbinden des Harzes erforderliche Erwärmen stellt einen schwerwiegenden Nachteil dar, da die Temperatur der Harzkomponenten in den Zuleitungen zum Packer schwierig zu kontrollieren ist.

Die DD-A-278 392 beschreibt ebenfalls ein Verfahren zum Verschließen von örtlichen Undichtigkeiten an unterirdisch verlegten Rohrleitungen, wobei über einen Packer eine gelbildende Injektionslösung in die Schadstelle verpreßt wird. Als Injektionslösung wird ein Gemisch aus Alkalisilicaten und Polyurethanprepolymeren und/oder Isocyanaten eingesetzt. Dieses Injektionsgemisch hat den Nachteil, daß es aufgrund der organischen Polymerkomponenten einen hohen CSB-Wert (CSB = chemischer Sauerstoffbedarf) aufweist, der zu einer Bodenbelastung führen kann. Dieser kritisch gesehene CSB-Wert wird noch weiter dadurch erhöht, daß zum Vermischen der ineinander nicht löslichen Komponenten ein Emulgator eingesetzt werden muß.

Aus der DE-A-43 15 927 ist ein Packersystem bekannt, bei dem mit drei Asperrmanschetten zwei Kompartimente der Rohrleitung abgegrenzt werden. Der Packer enthält zwei getrennte Irjektionsleitungen, von denen die eine im ersten Kompartiment und die zweite im zweiten Kompartiment mündet. In eine schadhafte Stelle kann durch die vordere Zuleitung eine Gelbildende Komponente wie beispielsweise eine Alkalimetallsilicatlösung eingepreßt werden. Danach wird der Packer soweit weiterbewegt, daß nun das zweite Kompartiment an die ausgewählte Schadstelle zu liegen kommt. Dann wird durch die hintere Zuleitung Härterlösung (Ester niedriger ein- und mehrwertiger Alkohole mit Mono-, Di- oder Polycarbonsäuren, Säureamide und dergleichen bzw. sauer reagierende Substanzen oder Salze mehrwertiger Kationen) verpreßt, die mit der zuvor eingepreßten Wasserglaslösung zu einer Gelbildung führt. Dieses Verfahren hat den Nachteil, daß eine zuverlässige Gelbildung in einer vorherbestimmbaren Zeit nicht möglich ist, da der Grad der Vermischung der beiden getrennt eingepreßten Lösungen weder zu kontrollieren noch zu beeinflussen ist. Das Dokument enthält keinerlei Angaben über Gelbildungszeiten, so daß keine Abschätzung über die Arbeitsgeschwindigkeit gegeben werden kann. Aus Anspruch 4 ist lediglich zu entnehmen, daß nach einer Verweilzeit von 1 Minute bis 24 Stunden, vorzugsweise von 5 bis 60 Minuten, die überschüssigen Komponenten getrennt abgesaugt werden.

Gemäß der Lehre der DE-A-33 34 508 lassen sich Schadstellen in beispielsweise Kanälen dadurch abdichten, daß man in die Schadstelle eine Wasserglaslösung einbringt, die zusätzlich ein wasserlösliches organisches Polymer enthält, das ein Hydrogel ausbilden kann. Das Aushärten dieser Lösung erfolgt dadurch, daß man es mit Kieselfluorwasserstoffsäure in Kontakt bringt. Dabei wird nicht mit einem Packer gearbeitet, sondern der gesamte zu sanierende Kanalabschnitt wird mit der Injektionslösung geflutet. Unter ihrem eigenen hydrostatischen Druck dringt die Injektionslösung in Schadstellen ein. Überschüssige Lösung muß abgepumpt werden. In einem zweiten Verfahrensschritt wird die Kieselfluorwasserstoffsäure in den Kanalabschnitt eingebracht. Dieses Verfahren erfordert die Handhabung sehr großer Flüssigkeitsmengen und weist durch den Einsatz der aggressiven Kieselfluorwasserstoffsäure ein hohes Gefahrenpotential auf.

Ein ähnliches Flutungsverfahren beschreibt die WO 89/05887. Hierbei wird der zu sanierende Kanalabschnitt mit einer Wasserglas enthaltenden Flüssigkeit angefüllt und gegebenenfalls mit einer weiteren Flüssigkeit umgesetzt, die ein Hydrogel bildet. Zusätzlich wird der Wasserglaslösung eine wäßrige Suspension eines hydraulischen Bindemittels zugesetzt. Auch dieses Verfahren weist den Nachteil auf, daß der Rohrleitungsabschnitt zunächst völlig mit Flüssigkeit gefüllt und der Flüssigkeitsüberschuß später wieder abgepumpt wird. Generell haben derartige Flutungsverfahren den weiteren Nachteil, daß das Eindringen der Injektionslösungen in die Schadstellen nur unter dem relativ geringen hydrostatischen Druck der Injektionslösungen erfolgt.

Die Erfindung stellt sich die Aufgabe, ein verbessertes Verfahren zur Sanierung defekter erdverlegter Rohrleitungen zur Verfügung zu stellen. Dabei sollen Injektionslösungen zum Einsatz kommen, die nach einer einstellbaren Härtezeit im Bereich von wenigen Minuten Hydrogele bilden. Diese Bedingung macht es erforderlich, geeignete Kombinationen von Gelbildner und Härtersubstanzen aufzufinden. Die Gele können je nach erwünschtem Einsatzgebiet als elastische Weichgele oder als feststoffreichere Hartgele vorliegen. Die Mittel sollen ohne gesundheitliche Gefährdung eingesetzt werden können und sich im Erdreich möglichst umweltneutral verhalten. Beispielsweise sollen sie einen möglichst geringen CSB-Wert aufweisen und keine aggressiven Stoffe wie beispielsweise Kieselfluorwasserstoffsäure enthalten.

Diese Aufgabe wird gelöst durch ein Verfahren zur Abdichtung schadhafter Stellen in nicht begehbaren erdverlegten Rohrleitungen durch Injektion einer gelbildenden Flüssigkeit aus dem Rohrleitungsinnenraum in den schadhaften Bereich, bei dem der schadhafte Rohrleitungsabschnitt in beiden Richtungen über einen oder zwei gegen die Kanalwandung verspannbare(n) Packer begrenzt und die gelierende Flüssigkeit in den durch den oder die Packer abgeschlossenen Rohrleitungsabschnitt eingepreßt wird, **dadurch gekennzeichnet,** daß als gelbildende Flüssigkeit eine Wasserglaslösung eingesetzt wird, die im Packer selbst, vor dem Einspeisen in den Packer oder beim Austreten aus dem Packer mit Estern oder mit einer wäßrigen Härterlösung vermischt wird, die eine oder mehrere der folgenden Komponenten enthält: Alkalimetall-Aluminat, Salze von Erdalkalimetall-Kationen, saure wasserlösliche Salze. Glyoxal, organische Säuren oder deren Verbindungen, die Hydroxidionen zu binden vermögen.

Die Anwendbarkeit dieses Verfahrens für Rohrleitungen mit unterschiedlichem Querschnitt ist lediglich durch die technische Ausführung des Packers begrenzt. Derzeit stehen Packer für Leitungsquerschnitte bis etwa 120 cm zur Verfügung. Diese sind videogesteuert positionierbar und weisen derzeit eine übliche Verarbeitungslänge von bis zu etwa 30 cm auf. Spezialkonstruktionen für die Sanierung von Längsrissen können Längen bis zu etwa einem Meter erreichen Derartige Geräte sind dem Fachmann auf dem Gebiet der Rohrleitungssanierung bekannt.

Als Wasserglaslösungen kann man Natrium- und/oder Kaliumwasserglaslösungen einsetzen. Aus Kostengründen sind Natriumwasserglaslösungen bevorzugt. Diese weisen auch ein günstigeres Viskositätsverhalten auf als Kaliumwasserglaslösungen. Die für das erfindungsgemäße Verfahren einsetzbaren Wasserglaslösungen weisen vorzugsweise einen Feststoffanteil im Bereich von 2 bis 40 Gew.-%, insbesondere von 5 bis 25 Gew.-%` auf. Feststoffgehalte im oberen Bereich sind insbesondere dann bevorzugt, wenn sich hinter der Schadstelle in der Rohrleitung durch Auswaschen bereits eine Kaverne gebildet hat, die mit dem aus der Injektionslösung entstehenden Gel aufgefüllt werden soll. Der Feststoffanteil ist nach oben jedoch durch die Viskosität der Lösung und die möglicherweise zu rasch erfolgende Gelbildung begrenzt. Lösungen mit geringerem Feststoffanteil werden bevorzugt dann eingesetzt, wenn die Lösung hinter der Schadstelle in lockeren Boden eindringen soll. Die Wasserglaslösungen weisen vorzugsweise ein Molverhältnis von SiO₂:M₂O, M = Alkalimetall (= Modul) im Bereich von etwa 2 bis etwa 5 auf. Module an der unteren Grenze dieses Bereichs und darunterliegende haben den Nachteil, daß sie sehr stark alkalische Wassergläser beschreiben. Dies hat bei der erfindungsgemäßen Verwendung einen starken Alkalieintrag in den Boden zur Folge und erfordert die Verwendung größerer Mengen Härtersubstanzen. Module im oberen Bereich beschreiben siliciumreiche Wassergläser, die weniger stark alkalisch sind und die mit geringeren Härterzusätzen zur Gelbildung zu bringen sind. Mit steigendem Modul erhöht sich jedoch bei gleichem Feststoffgehalt der Lösung die Viskosität, so daß das Umpumpen dieser Wasserglaslösungen zunehmend schwieriger wird. Wasserglaslösungen mit Modulen im Bereich von etwa 2,7 bis 4,2 stellen einen guten Kompromiß zwischen den unterschiedlichen Anforderungen dar und sind daher bevorzugt.

Härtersubstanzen, die eine Alkalimetallsilicatlösung in ein Hydrogel überführen, sind in großer Anzahl bekannt. Ihre Wirkung kann einmal darin bestehen, daß Härterbestandteile zusammen mit Silicationen schwer lösliche Niederschläge bilden, die die Wasserglaslösung zu einem Gel umwandeln. Beispiele hierfür sind Alkalimetallaluminatlösungen, beispielsweise Natriumaluminatlösungen, die beim Vermischen mit Wasserglaslösung ein Alumosilicatgel bilden. Ähnlich reagieren Erdalkalimetall-Kationen, bei denen das Ausfällen von schwerlöslichen Erdalkalimetallsilicaten die Gelbildung hervorrufen. Zum andern kann der Gelbildungsmechanismus jedoch auch darauf beruhen, daß die Härtersubstanzen Hydroxidionen der alkalischen Wasserglaslösung binden. Hierdurch erniedrigt sich der pH-Wert der Silicatlösung. was zum Ausfällen gelbildender Kieselsäure führt. In dieser Weise wirken wasserlösliche Salze, die noch saure Wasserstoffionen enthalten. Beispiele derartiger saurer wasserlöslicher Salze, die im Sinne der Erfindung als Härter einsetzbar sind, sind Hydrogenphosphate, Dihydrogenphosphate, Hydrogensulfate und/oder Hydrogencarbonate. Aus der letzten Gruppe sind besonders Hydrogencarbonate geeignet.

Als Härtersubstanzen, die durch Binden von Hydroxidionen zur Bildung von Kieselsäuregelen aus Wasserglaslösungen führen, können jedoch auch organische Säuren oder deren Verbindungen, die Hydroxidionen zu binden vermögen, eingesetzt werden. Derartige Substanzen kommen dann in Frage, wenn der hierdurch bedingte CSB-Gehalt der Injektionslösung als nicht problematisch für den vorliegenden Boden angesehen wird. Beispiele derartiger Verbindungen sind Carbonsäureester oder Kohlensäureester, aus denen durch Hydrolyse in der alkalischen Wasserglaslösung die freie Säure entsteht, die ihrerseits Hydroxidionen bindet. Um die CSB-Belastung zu begrenzen, setzt man vorzugsweise Ester niederer Alkohole, insbesondere Ethylester, ein. Alternativ lassen sich Ester mehrwertiger Alkohole mit kurzketteigen Carbonsäuren einsetzen, beispielsweise Essigsäureester von Glykol oder Glycerin. Glycerintriacetat ist ein bevorzugtes Beispiel. Als bevorzugte Härtersubstanz kommt weiterhin Glyoxal in betracht, das aufgrund seines geringen Molekulargewichts zu einer besonders geringen CSB-Belastung führt. Seine Wirkung beruht darauf, daß es sich in der alkalischen Wasserglaslösung nach einer bestimmten Zeit zu Hydroxyessigsäure umlagert, die ihrerseits Hydroxidionen bindet. Hydroxyessigsäure stellt eine natürlich vorkommende Substanz dar, deren biologischer Abbau keine Probleme bereitet. Mischungen unterschiedlicher organischer Härtersubstanzen, beispielsweise eine Mischung von Glycerintriacetat und Propylenearbonat, können zu besonders günstigen Gelbildungszeiten führen.

Verwendet man als Härterlösung eine Alkalimetall-Aluminatlösung, so wählt man deren Konzentration und Menge vorzugsweise so, daß in der vermischten Wasserglas/Härterlösung das Molverhältnis SiO₂:Al₂O₃ im Bereich von etwa 5 bis etwa 100 liegt.

Die Konzentrationen der Wasserglas- und der Härterlösung sowie deren Mischungsverhältnis stellt man vorzugsweise so ein, daß das Verhältnis des Feststoffgehalts der Wasserglaslösung zum Wirkstoffgehalt der Härterlösung im Bereich von etwa 100:2 bis 100:100 liegt und daß der gesamte Feststoffanteil der vermischten Wasserglas- und Härterlösung im Bereich zwischen etwa 2 und etwa 50 Gew.-% liegt. Dabei sind für Hartgele Gewichtsverhältnisse des Feststoffgehalts der Wasserglaslösung zum Wirkstoffgehalt der Härterlösung im Bereich von etwa 100:2 bis etwa 100:50, für Weichgele Gewichtsverhältnisse von etwa 100:10 bis etwa 100:100 bevorzugt. Unter Wirkstoffgehalt der Härterlösung wird bei Lösungen salzartiger Härter der Feststoffgehalt verstanden. Bei organischen insbesondere bei Raumtemperatur flüssigen Härtern ist hiermit der Anteil der organischen Komponente gemeint, der bei reinen Estern 100 % beträgt. Durch das Verhältnis des Feststoffgehalts der Wasserglaslösung zum Wirkstoffgehalt der Harterlösung läßt sich die Zeit bis zum Eintritt der Gelbildung einstellen. Je geringer dieses Verhältnis ist, desto rascher tritt die Gelbildung ein. Dabei hängt die Zeit bis zum Eintritt der Gelbildung auch vom Modul der Wasserglaslösung sowie von der chemischen Natur der Härterlösung ab und muß für die jeweilige Kombination experimentell bestimmt werden. Durch Variation dieser Parameter läßt sich die Zeit bis zur Gelbildung an die erwünschte Verarbeitungszeit anpassen. Diese hängt wiederum von der Durchführungsart des Sanierungsverfahrens ab, worauf weiter unten noch eingegangen wird. Das erfindungsgemäße Verfahren unterscheidet sich von Verfahren nach dem Stand der Technik insbesondere darin, daß die Härtezeit des Gels reproduzierbar minutengenau einstellbar ist. Hierfür kann es beispielsweise günstig sein, eine Kombination unterschiedlicher Härter einzusetzen, die sich in ihrer Reaktionszeit unterscheiden. Ein Beispiel hierfür ist die Kombination des eher langsam reagierenden Glyoxals mit dem eher schnell reagierenden Natriumhydrogencarbonat. Generell läßt sich die Gelbildung bei Verwendung von Estern als Härter durch Zusatz saurer Salze beschleunigen.

Unabhängig von der gewählten Härtersubstanz wählt man die Konzentrationen der jeweiligen Lösungen derart, daß die Wasserglas/Härterlösung nach dem Vermischen eine SiO₂-Konzentration im Bereich von etwa 1 bis etwa 30 Gew.-% aufweist. Dabei sind für Weichgele SiO₂-Gehalte von etwa 5 bis etwa 10 Gew.-%, für Hartgele von etwa 20 bis etwa 30 Gew.-% bevorzugt. Bei geringeren Konzentrationen ist die Gelbildung nicht mehr gewährleistet, bei höheren Konzentrationen wird die Verarbeitung wegen der hohen Viskosität und der gegebenenfalls sehr raschen Gelbildung zunehmend schwieriger. Konzentrationen am unteren Ende des Bereichs wählt man jedoch vorteilhafterweise dann, wenn die Injektionslösung in wenig poröses Erdreich eindringen soll. Konzentrationen im oberen Bereich sind bevorzugt, wenn sich an der Schadstelle der Rohrleitung im umgebenden Erdreich durch Auswaschung bereits ein Hohlraum gebildet hat, der durch das Gel vollständig ausgefüllt werden soll.

Die Viskosität der vermischten Wasserglas/Härterlösung bei der Verarbeitungstemperatur sollte in einem Bereich liegen, daß die Lösung gut in die Schadstellen und dahinterliegendes Erdreich oder Hohlräume eindringen kann. Günstig sind Viskositäten im Bereich von etwa 1 bis etwa 300 mPa·s (bestimmbar nach Brookfield). Viskositäten kleiner als 200 mPa·s, beispielsweise im Bereich von 2 bis 100 mPa·s, sind besonders günstig. Die Viskosität hängt von der Konzentration und dem Modul der Wasserglaslösung ab. Bekanntermaßen bewirken hohe Module und hohe Konzentrationen hohe Viskositäten.

Die Steuerung der Zuführung der Wasserglas- und der Härterlösung in den Packer ist dann besonders einfach zu regeln, wenn man die Konzentrationen der beiden Lösungen so einstellt. daß jeweils gleiche Volumenteile der beiden Lösungen miteinander vermischt werden müssen. Je nach Packerkonstruktion und Pumpenauslegung sind jedoch auch andere Volumenverhältnisse möglich. Die technisch realistische Spanne der Volumenverhältnisse liegt zwischen etwa 10:1 und etwa 1:1. Beispielsweise sind Packer verfügbar, bei denen das Volumenverhältnis 8:1 beträgt. Prinzipiell kann man die Wasserglas- und die Härterlösung zuerst vermischen und dann über eine einzige Schlauchleitung in den Packer einspeisen. Dabei ist es jedoch schwierig. einerseits eine Gelbildung in der Schlauchleitung zu vermeiden und andererseits nach Injektion der Lösung in die Schadstelle eine rasche Gelbildung zu erzielen. Verarbeitungstechnisch ist es daher einfacher, wenn auch apparativ aufwendiger, die Wasserglas- und die Härterlösung durch getrennte Schlauchleitungen in den Packer einzuspeisen und erst im Packer selbst oder vorzugsweise in dem Ringraum zwischen Packer und Kanalwand, also unmittelbar nach Austritt aus dem Packer, miteinander zu vermischen. Selbstverständlich setzt dies eine entsprechende Konstruktion des Packers voraus. Vorzugsweise setzt man Packer ein, bei denen die Vermischung durch geeignete Mischdüsen beim Austritt aus dem Packer in den Ringraum erfolgt. Eine Gelbildung in der Mischdüse nach Beendigung des Injizierens kann vermieden werden, wenn man die Düse kurzeitig mit einer der beiden Lösungen, vorzugsweise mit der Härterlösung, freispült. Möglich ist es jedoch auch, mit zwei in den Ringraum mündenden Düsen zu arbeiten, so daß die Vermischung der beiden Lösungen im Ringraum um den Packer vor Eintritt in die Schadstelle beginnt. Vorzugsweise sind in diesem Fall die Düsen gegeneinander gerichtet, so daß eine intensive Vermischung der beiden Lösungen erfolgt.

Besonders vorteilhaft sind Packer, bei denen man den durch die beiden Absperrmanschetten abgegrenzten Ringraum zwischen Packerkörper und Innenwand der Rohrleitung durch eine aufblasbare Innenmanschette verändern kann. Ein derartiger Packer wird vorteilhafterweise derart eingesetzt, daß man das Volumen des Ringraums zwischen Packerkörper und Innenwand der Rohrleitung vor Beginn des Injizierens und vor dem Verspannen der Verspannmaschetten durch Aufblähen der Innenmanschette veringert und vorzugsweise gegen Null bringt. Hierdurch wird gewährleistet, daß sich beim Beginn des Injizierens der Wasserglas/Härterlösung kein Sickerwasser mehr im zu sanierenden Rohleitungsabschnitt befindet, das die Gelbildungszeit unkontrolliert beeinflussen könnte. Nach Verspannen der Verspannmanschetten injiziert man Wasserglas- und Härterlösung in den Ringraum zwischen Packerkörper und Rohrleitung und verpreßt die vermischte Injektionslösung in die Schadstelle. Vorteilhafterweise erfolgt dieses Verpressen ebenfalls durch Aufblähen der Innenmanschette, vorzugsweise durch deren Aufblasen mit Preßluft.

Setzt man einen einzelnen Packer zur Instandsetzung einer räumlich eingegrenzten Schadstelle mit einer Ausdehnung längs der Rohrleitung von nicht mehr als etwa 100 cm ein, ist es vorteilhaft, wenn die vermischte Wasserglas/Härterlösung in einem Zeitintervall von etwa 15 Sekunden bis etwa 5 Minuten aushärtet. Vorzugsweise liegt die Härtezeit zwischen etwa 30 Sekunden und etwa 3 Minuten. Für Weichgele stellt man Zeiten im unteren Bereich dieses Intervalls ein, für Hartgele im oberen Bereich. Wie weiter oben ausgeführt, ist diese Zeit durch die chemische Natur der Härterkomponenten, durch das Modul der Wasserglaslösung und durch die Konzentrationen der Lösungen einstellbar. Kürzere Zeiten als etwa 15 Sekunden haben den Nachteil, daß die Gelbildung bereits einsetzen kann, bevor die Schadstelle zuverlässig gefüllt ist. Längere Gelbildungszeiten vermeiden dieses Problem, verzögern jedoch den Arbeitsablauf und sind daher zunehmend unwirtschaftlich. Dies hängt damit zusammen, daß der Packer an der Schadstelle verbleiben muß, bis durch die Gelbildung eine vollständige Abdichtung der Schadstelle erreicht ist. Dies kann dadurch kontrolliert werden, daß man vor dem Weiterfahren des Packers an der sanierten Schadstelle eine Druckprobe, beispielsweise mit Preßluft oder mit Wasser durchführt. Zeigt die Druckprobe eine mangelnde Abdichtung an, kann die Injektion der Wasserglas/Härterlösung wiederholt werden.

Mit einem einzigen Packer lassen sich nach diesem Verfahren nur räumlich wenig ausgedehnte Schadstellen wie beispielsweise schadhafte Muffen oder Querrisse oder bei geeigneter Packerkonstruktion auch Längsrisse bis zu etwa 1 m Länge sanieren. Längere Streckenschäden können saniert werden, wenn man den genannten Packer mit etwa 1 Meter Arbeitslänge unter Kamerabeobachtung wiederholt entlang der Schadstelle positioniert und jeweils die Injektion durchführt. Für ausgedehntere Schadstellen, wie beispielsweise längere Längsrisse. kann es auch vorteilhaft sein, das Verfahren unter Verwendung von zwei Packern durchzuführen. Auf diese Weise lassen sich Schadstellen von bis zu mehreren Metern Länge sanieren. Prinzipiell kann man dabei so vorgehen, daß man einen Rohrleitungsabschnitt durch die beiden Packer absperrt, mit der Wasserglas/Härterlösung füllt und diese unter Einwirkung eines Drucks in die Schadstelle verpreßt. Dies hat den Nachteil, daß ein Teil der Wasserglas/Härterlösung auch innerhalb der Rohrleitung geliert.

Vorzugsweise geht man daher so vor, daß man die beiden Packer mit einem aufblasbaren Schlauch verbindet, der durch Einpressen von beispielsweise Luft oder Wasser an die Rohrleitungsinnenwand angepreßt werden kann. Bei höchstens teilweise aufgeblähtem Verbindungsschlauch füllt man den Raum zwischen Schlauch und Rohrleitungswand mit der Wasserglas/Härterlösung und verpreßt diese durch Aufblähen des Schlauchs in die Schadstellen. Hierdurch wird der Anteil an Härterlösung, der im lichten Querschnitt der Rohrleitung verbleibt, deutlich verringert. Da dieses Vorgehen längere Taktzeiten erforderlich macht, ist es vorteilhaft, Wasserglas- und Härterlösung so einzustellen, daß die Gelierzeit nach deren Vermischen im Bereich von etwa 1 bis etwa 10 Minuten liegt.

Bei geringeren Rohrleitungsschäden reicht es aus, einmalig Wasserglas/Härterlösung in die Schadstelle zu Injizieren, die Gelbildung abzuwarten und, gegebenenfalls nach einer Druckprobe, den Packer oder das Packerpaar zur nächsten Schadstelle bzw. zum nächsten Sanierungsabschnitt zu versetzen. Wenn sich hinter der Schadstelle an der Rohrleitung sehr lockerer Boden oder ein durch Auspülen entstandener Hohlraum im Erdreich befindet, kann es vorteilhaft sein, zunächst ein erstes Verpressen von Wasserglas/Härterlösung in die schadhafte Rohrleitungsstelle durchzuführen. Nach der Gelbildung und der so bewirkten Bildung eines Widerlagers kann ein- oder mehrmals weitere Wasserglas/Härterlösung in die Schadstelle injiziert werden, bis diese keine weitere Injektionslösung mehr aufnimmt. Hierdurch kann bei stark porösem oder ausgewaschenem Boden die Gesamtmenge der erforderlichen Wasserglas/Härterlösung verringert werden.

In allen Fällen erfolgt das Verpressen der Wasserglas/Härterlösung in die Schadstelle vorteilhafterweise unter Druck, beispielsweise durch Verwendung entsprechender Pumpen oder unter Verwendung von Preßluft. Die erforderlichen Drücke liegen bei großen Rohrleitungsquerschnitten in der Größenordnung 0,5 bar, bei kleinen Rohrleitungsquerschnitten in der Größenordnung 1 bis 2 bar.

Die erfindungsgemäß einzusetzenden Wasserglas/Härterlösungen haben den Vorteil, bereits im unreagierten Zustand weitgehend umweltneutral zu sein. Die entstehenden Gele stellen elastische Weichgele oder Hartgele dar. Feststoffreiche Gele (Hartgele) sind besonders resistent gegen Verformung durch Austrocknung und zeigen weniger Schrumpf. Sie sind weitgehend unempfindlich gegen Änderungen der Bodenfeuchte.

Die erfindungsgemäßen Systeme aus Wasserglas und Härterlösung haben den Vorteil, daß sich das Zeitintervall bis zur Gelbildung und damit die Verarbeitungszeit gut reproduzierbar einstellen läßt. Nach Ablauf der Gelbildungszeit erfolgt die Gelbildung zuverlässig und rasch. Hierdurch ist eine hohe Verarbeitungssicherheit bei kurzer Taktzeit gegeben. Es ist nicht erforderlich, die Injektionslösungen zu erwärmen. Die Gele härten bei den üblicherweise angetroffenen Bodentemperaturen zuverlässig aus.

### Beispiele

Im Folgenden wird eine Reihe von Wasserglas/Härtersystemen beschrieben, die zu den erfindungsgemäß angestrebten Gelbildungszeiten führen. Alle Prozentangaben bedeuten Gewichtsprozent.

Als Wasserglaslösungen können eingesetzt werden (Handelsprodukte der Firma Henkel KGaA. Düsseldorf):

| | |
|---|---|
| Na-Wasserglas HK 30 | mit 22,39 % SiO₂ und 5,83 % Na₂O |
| | Gewichtsverhältnis SiO₂ zu Na₂O = 3,84 |
| Na-Wasserglas 37/40 | mit 27,01 % SiO₂ und 7,99 % Na₂O |
| | Gewichtsverhältnis SiO₂ zu Na₂O = 3,38 |
| Na-Wasserglas 43/45 | mit 31,32 % SiO₂ und 10,10 % Na₂O |
| | Gewichtsverhältnis SiO₂ zu Na₂O = 3,10 |
| Na-Wasserglas 48/50 | mit 33,36 % SiO₂ und 12,10 % Na₂O |
| | Gewichtsverhältnis SiO₂ zu Na₂O = 2,76 |
| K-Wasserglas 40 | mit 27,53 % SiO₂ und 13,17 % K₂O |
| | Gewichtsverhältnis SiO₂ zu K₂O = 2,09 |

Die drei letztgenannten Wasserglastypen sind sehr viskos. Sie müssen mit Wasser verdünnt werden, um gut pumpfähige Lösungen zu erhalten. Als Wasser wurde generell vollentsalztes Wasser verwendet.

### Beispiele für Injektionslösungen:

Die Wasserglas- und die Härterlösung wurden in einem Becherglas rasch miteinender vermischt und die Zeit bis zur Gelbildung (Festwerden der Lösung) bestimmt.

### Injektionslösungen für Weichgele:

| Beispiel Nr. | Wasserglaslösung | Härterlösung | Gelbildungszeit bei 25 °C |
|---|---|---|---|
| Beisp. 1 | 50,0 g Na-Wasserglas 37/40 | 71,0 g Wasser | 150 Sekunden |
| | 41,5 g Wasser | 4,2 g Na-Hydrogencarbonat | |
| | | 7,3 g 40 %-ige Glyoxallösung | |
| Beisp. 2 | 50,0 g Na-Wasserglas 37/40 | 71,0 g Wasser | 70 Sekunden |
| | 41,5 g Wasser | 4,8 g Na-Hydrogencarbonat | |
| | | 7,3 g 40 %-ige Glyoxallösung | |
| Beisp. 3 | 50,0 g Na-Wasserglas 37/40 | 71,0 g Wasser | 60 Sekunden |
| | 41,5 g Wasser | 4,9 g Na-Hydrogencarbonat | |
| | (78,2 ml Lösung) | 7,3 g 40 %-ige Glyoxallösung (78,1 ml Lösung) | |
| Beisp. 4 | 50,0 g Na-Wasserglas 37/40 | 71,0 g Wasser | 50 Sekunden |
| | 41,5 g Wasser | 5,0 g Na-Hydrogencarbonat | |
| | | 7,3 g 40 %-ige Glyoxallösung | |

### Injektionslösungen für Hartgele

Als Hilfsstoffe wurden zusätzlich eingesetzt:
- Glucopon^{R} 215 CS:: C₈-C₁₀-Alkyl-1,5-Glucosid (Handelsprodukt der Henkel KGaA) als 20 %-ige Lösung
- Triton^{R} BG 10:: Zucker-Fettalkohol-Acetal (Handelsprodukt von Union Carbide) als 17,5 %ige Lösung

Mit Ausnahme von Beispiel 9 wurden die Gelbildungsversuche bei 23 °C durchgeführt.

| Beispiel Nr. | Wasserglaslösung | Härter | Gelbildungszeit |
|---|---|---|---|
| Beisp. 5 | 100,0 g Na-Wasserglas HK 30 | 5,7 g Glycerintriacetat | 120 Sekunden: steif |
| | 0,2 g Glucopon 215 CS | 2,8 g Propylencarbonat | 210 Sekunden: Hartgel |
| Beisp. 6 | 100,0 g Na-Wasserglas 37/40 | 6,8 g Glycerintriacetat | 180 Sekunden: steif |
| | 0,2 g Triton BG 10 | 3,4 g Propylencarbonat | 275 Sekunden: Hartgel |
| Beisp. 7 | 100,0 g Na-Wasserglas 37/40 | 5,1 g Glycerintriacetat | 110 Sekunden: steif |
| | 0,2 g Triton BG 10 | 5,1 g Propylencarbonat | 130 Sekunden: Hartgel |
| Beisp. 8 | 100,0 g K-Wasserglas 40 ¹⁾ | 5,1 g Glycerintriacetat | 60 Sekunden: steif |
| | 0,2 g Glucopon 215 CS | 5,1 g Propylencarbonat | 390 Sekunden: Hartgel |
| Beisp. 9 ²⁾ | 100,0 g Na-Wasserglas 37/40 | 5,1 g Glycerintriacetat | Beginn der Gelbildung nach 75 Sekunden bei 25 °C |
| | 0,2 g Triton BG 10 (Volumen: 74,2 ml) | 5,1 g Propylencarbonat (Volumen: 9,2 ml) | |

| | | | |
|---|---|---|---|
| ¹⁾ Verdünnung vor dem Einwiegen: 534,0 g K-Wasserglas 40 wurden mit 16.6 g Wasser verdünnt. Man erhält eine Lösung mit 26.73 % SiO₂ und 12,79 % K₂O. Hiervon wurden für Beispiel 8 100 g eingesetzt. | | | |
| ²⁾ Das Beispiel zeigt ein Wasserglas/Härtersystem. das im Volumenverhältnis 8 : 1 injiziert werden kann. | | | |

### Beispiel 10

| | | |
|---|---|---|
| Wasserglaslösung: | 100,0 g Na-Wasserglas 37/40 | |
| | 0,2 g Triton BG 10 | zusammen 74,2 ml |
| Härterlösung: | 7,2 g Glycerintriacetat | |
| | 3,6 g Propylencarbonat | zusammen 9,2 ml |

Wasserglas- und Härterlösung der genannten Zusammensetzung wurden im Volumenverhältnis 8 : 1 rasch gemischt (die Zeit bis zur Gelbildung beträgt 150 Sekunden). 85 g der gemischten Lösung wurden sofort mit 300 g Quarzsand F 32 intensiv vermischt, so daß die gesamte Luft entweichen konnte. Es wurde ein fester Körper erhalten, der nur einen sehr geringen Schrumpf zeigte. Das Beispiel belegt, daß beim Eintritt der Injektionslösung in das Erdreich die Bildung eines stabilen festen Körpers zu erwarten ist.

### Beispiel 11

In diesem Beispiel wurde eine Rohrsanierung (defekte Muffe) simuliert. Hierzu wurde bei einem Keramik-Kanalrohr mit einem Innendurchmesser von 200 mm ein Radialschnitt von 10 cm Länge angebracht. Das Rohrstück wurde in Maurersand der Körnung 0-3 mm eingebettet (eingeschwemmt und handverdichtet) und außen mit einer Stahlmanschette umgeben. Ein Cherne-Packer wurde an der defekten Stelle positioniert und mit 2,2 bar gegen das Rohr abgedichtet. Wasserglas- und Härterlösungen mit einer Zusammensetzung gemäß Beispiel 1 wurden mit einer Doppel-Hubkolbenpumpe mit einem Innendruck von 1 bar für 3 Minuten eingepreßt. Dabei wurden 4,85 Liter Wasserglaslösung und 10,96 Liter Härterlösung verpreßt. Die Vermischung der beiden Lösungen erfolgte im Ringraum zwischen Packer und Rohrwand durch Einspeisen über zwei gegeneinander gerichtete Düsen. Die Temperatur während des Versuchs betrug 19 °C. Während der Aushärtungszeit sank der Innendruck auf 0,8 bar.

Nach 10 Minuten Härtungszeit wurde eine Druckprobe durchgeführt. Hierzu wurde zunächst der Packer entlastet und erneut verspannt. Die Schadstelle wurde nun mit 0.8 bar (Sollwert nach DIN: 0.5 bar) für 2.5 Minuten belastet. Druckabfall trat nicht auf. Die Schadstelle war demnach der Norm entsprechend abgedichtet, obwohl die Pumpe nicht im vorgesehenen Volumenverhältnis von 1:1 förderte. Dies bedeutet, daß das Wasserglas/Härtersystem auch größere Abweichungen von der Solleinstellung toleriert. Somit könnte auch im Grundwasserbereich, wenn eventuell eine Verdünnung des eingepreßten Gels zu befürchten ist, mit der Solleinstellung injiziert werden.

Die Begutachtung des Packers nach den, Versuch zeigte eine ausgezeichnete Verträglichkeit der Injektionslösung mit den Gummidichtungen des Packers an. Haftende Gelreste traten kaum auf.

### Beispiel 12

In einem praktischen Sanierungsfall wurde ein etwa 600 m langer Kanalabschnitt für das Abwasser einer fettchemischen Produktionsstätte saniert. In diesem Kanalabschnitt waren Muffen undicht geworden, da das Dichtungsmaterial durch die Abwasserinhaltsstoffe zerstört worden war. Für die Sanierung wurde zum einen ein Weichgel gemäß Beispiel 2 eingesetzt, wobei Wasserglaslösung und Härterlösung im Volumenverhältnis 1 : 1 gemischt wurden. Für 11 Muffen wurde ein Hartgel gemäß Beispiel 6 verwendet, wobei Wasserglaslösung und Härterlösung im Volumenverhältnis 8 : 1 gemischt wurden. Pro sanierter Muffe wurden bei Verwendung von Weichgel im Mittel 8,8 l und bei Verwendung von Hartgel im Mittel 4,6 l der kombinierten Wasserglas/Härterlösung verbraucht. Die Durchmesser der sanierten Muffen lagen für Einsatz von Weichgel im Bereich von 250 bis 300 mm, bei Verwendung von Hartgel bei 350 bis 500 mm. Der Zeitbedarf für die Prozeßfolge Druckprüfung, Injektion der Wasserglas/Härterlösung, Aushärten der Injektionslösung und erneute Druckprobe lag bei dem kleineren Muffendurchmesser bei 11 Minuten, bei dem größeren Muffendurchmesser bei 15 Minuten. Die Druckprobe nach Aushärten der Injektionslösung erfolgte mit Luft bei einem Prüfdruck zwischen 0,5 und 1 bar oder mit Wasser bei einem Prüfdruck von 0,5 bar. In allen Fällen erwiesen sich die sanierten Muffen als dicht.

## Patentansprüche

1. Verfahren zur Abdichtung schadhafter Stellen in nicht begehbaren erdverlegten Rohrleitungen durch Injektion einer gelbildenden Flüssigkeit aus dem Rohrleitungsinnenraum in den schadhaften Bereich, bei dem der schadhafte Rohrleitungsabschnitt in beiden Richtungen über einen oder zwei gegen die Kanalwandung verspannbare(n) Packer begrenzt und die gelierende Flüssigkeit in den durch den oder die Packer abgeschlossenen Rohrleitungsabschnitt eingepreßt wird, **dadurch gekennzeichnet,** daß als gelbildende Flüssigkeit eine Wasserglaslösung eingesetzt wird, die im Packer selbst, vor dem Einspeisen in den Packer oder beim Austreten aus dem Packer mit Estern oder mit einer wäßrigen Härterlösung vermischt wird, die eine oder mehrere der folgenden Komponenten enthält: Alkalimetall-Aluminat, Salze von Erdalkalimetall-Kationen, saure wasserlösliche Salze, Glyoxal, organische Säuren oder deren Verbindungen, die Hydroxidionen zu binden vermögen.

2. Verfahren nach Anspruch 1, dadurch gekennzeichnet, daß die Wasserglaslösung eine Natrium- und/oder Kaliumwasserglaslösung mit einem Feststoffanteil im Bereich von 2 bis 40 Gew.-% darstellt und einen Modul (= Molverhältnis SiO₂ : M₂O, M = Alkalimetall) im Bereich von 2 bis 5 aufweist.

3. Verfahren nach einem oder beiden der Ansprüche 1 und 2, dadurch gekennzeichnet, daß die sauren wasserlöslichen Salze ausgewählt sind aus Hydrogenphosphaten, Dihydrogenphosphaten, Hydrogensulfaten und/oder Hydrogencarbonaten.

4. Verfahren, nach einem oder beiden der Ansprüche 1 und 2, dadurch gekennzeichnet, daß die Ester ausgewählt sind aus Carbonsäureestern und Kohlensäureestern.

5. Verfahren nach einen, oder beiden der Ansprüche 1 und 2, dadurch gekennzeichnet, daß die Härterlösung Alkalimetall-Aluminat in einer Menge enthält, daß in der vermischten Wasserglas/Härterlösung das Molverhältnis SiO₂ : Al₂O₃ im Bereich von 5 bis 100 liegt.

6. Verfahren nach einem oder mehreren der Ansprüche 1 bis 5, dadurch gekennzeichnet, daß das Verhältnis des Feststoffgehalts der Wasserglaslösung zum Wirkstoffgehalt der Härterlösung im Bereich von 100 : 2 bis 100 : 100 liegt und daß der Feststoffgehalt der vermischten Wasserglas- und Härterlösung im Bereich zwischen 2 und 50 Gew.-% liegt.

7. Verfahren nach einem oder mehreren der Ansprüche 1 bis 6, dadurch gekennzeichnet, daß die Wasserglas/Härterlösung nach dem Vermischen eine SiO₂-Konzentration im Bereich von 1 bis 30 Gew.-% aufweist.

8. Verfahren nach einem oder mehreren der Ansprüche 1 bis 7, dadurch gekennzeichnet, daß mm die Wasserglas- und die Härterlösung durch getrennte Zuleitungen in den Packer einspeist und innerhalb des Packers oder beim Austritt aus dem Packer vermischt.

9. Verfahren nach einem oder mehreren der Ansprüche 1 bis 8, dadurch gekennzeichnet. daß man die Wasserglas- und die Härterlösung gleichzeitig in den Ringraum zwischen Rohrleitungswand und Packer einspeist und in die schadhafte Rohrleitungsstelle verpreßt.

10. Verfahren nach Anspruch 9, dadurch gekennzeichnet, daß die Gelierzeit der vermischten Wasserglas/Härterlösung im Bereich von 15 Sekunden bis 5 Minuten liegt.

11. Verfahren nach einem oder mehreren der Ansprüche 1 bis 8, dadurch gekennzeichnet, daß man eine Rohrleitungsstrecke mit zwei Packer absperrt, zwischen denen sich ein aufblasbarer Schlauch befindet, die Wasserglas/Härterlösung in den Zwischenraum zwischen Rohrleitungswand und Schlauch einspeist und durch Aufblähen des Schlauchs in die schadhaften Rohrleitungsstellen verpreßt.

12. Verfahren nach Anspruch 11, dadurch gekennzeichnet, daß die Gelierzeit der vermischten Wasserglas/Härterlösung im Bereich von 1 bis 10 Minuten liegt.

13. Verfahren nach einem oder mehreren der Ansprüche 1 bis 12, dadurch gekennzeichnet, daß man ein erstes Verpressen der Wasserglas/Härterlösung in die schadhafte Rohrleitungsstelle durchführt und nach Ablauf der Gelierzeit den Vorgang mindestens einmal wiederholt.
